# EUROPEAN PATENT SPECIFICATION

(11) **EP 4 020 226 B1**
(45) Date of publication and mention of the grant of the patent: **01.01.2025**
(21) Application number: 21195477.1
(22) Date of filing: 08.09.2021
(51) Int. Cl.: G06F 12/084, G06F 12/0837, G06F 12/0842

(54) **INTER-NODE MESSAGING CONTROLLER**
STEUERGERÄT ZUR NACHRICHTENÜBERMITTLUNG ZWISCHEN KNOTEN
CONTRÔLEUR DE MESSAGERIE INTER-NOEUDS

(30) Priority: 22.12.2020 US 202017130177
(43) Date of publication of application: 29.06.2022
(73) Proprietor: Intel Corporation, Santa Clara, CA 95054 (US)
(72) Inventor: Beckmann, Carl Josef, Newton, MA 02462 (US); Krishnan, Venkata Sambasivan, Ashland, MA 01721 (US); Dogan, Halit, Westborough, MA 01581 (US)
(74) Representative: Samson & Partner Patentanwälte mbB

(56) References cited:
- US-A1- 2015 242 324
- US-A1- 2020 242 042

## Description

### Technical Field

The present disclosure pertains in general to data processing systems and in particular to technology for communicating data between nodes of a data processing system.

### Background

A conventional data processing system may include one or more processors, and each processor may include one or more processing cores. Also, each processing core may include a first level cache. For purposes of this disclosure, a processing core may be referred to simply as a "core" or as a "node," and a first-level cache may be referred to as a "level-one cache" or an "L1 cache." Such a system is disclosed in US 2015/242324

A conventional data processing system with multiple cores may execute multiple threads concurrently, with each thread executing on a different core. Threads on different cores (e.g., a first thread on a first core and a second thread on a second core) may use shared memory to communicate data from one thread to another. For instance, when the first thread is the producer of the data, and the second thread is the consumer, the first thread (the "producer thread") may use a store instruction to save data from a register in the first core to a memory location in the shared memory. The second thread (the "consumer thread") may then use a load instruction to read the data from the shared memory to a register in the second core.

However, such a process may be inefficient, due to cache coherency requirements. For instance, the operations for meeting cache coherency requirements may involve core-to-core snoop latencies, and those latencies may lead to pipeline bubbles that make it difficult or impossible to achieve desired levels of performance when data is communicated between cores. For instance, it may be difficult or impossible to achieve sufficiently high levels of core throughput and communication bandwidth and sufficiently low levels of communication latency for messaging between cores. Consequently, the software in a conventional data processing system may be designed to minimize communications between cores.

### Brief Description of the Drawings

Features and advantages of the present invention will become apparent from the appended claims, the following detailed description of one or more example embodiments, and the corresponding figures, in which:
**Figure 1** is a block diagram of an example embodiment of a data processing system with at least one inter-node messaging controller.
**Figure 2** is a block diagram that depicts additional details for some parts the data processing system of Figure 1.
**Figure 3** presents a flowchart of an example embodiment of a process for communicating data from one node to another, in the context of the data processing system of Figures 1 and 2.
**Figure 4** is a block diagram of a system according to one or more embodiments.
**Figure 5** is a block diagram of a first more specific exemplary system according to one or more embodiments.
**Figure 6** is a block diagram of a second more specific exemplary system according to one or more embodiments.
**Figure 7** is a block diagram of a system on a chip according to one or more embodiments.

### Detailed Description

For purposes of this disclosure, a "node" is a processing unit within a data processing system. Many different kinds of processing units may be considered nodes, including without limitation general-purpose processing cores and special-purpose processing cores, such as graphics processing units (GPUs) and other types of computation accelerators.

The nodes in a conventional data processing system do not support a native messaging model. Instead, those nodes may use load and store instructions for communications between threads running on different nodes. However, as indicated above, ordinary load and store instructions are generally inefficient when used to communicate messages or data from one node to another in a modern cache-coherent system.

In addition or alternatively, for communications between threads running on different cores, a data processing system may use technology such as that described in U.S. patent no. 10,606,755, entitled "Method And System For Performing Data Movement Operations With Read Snapshot And In Place Write Update." That patent ("the '755 patent") is based on an application that was filed on 2017-06-30 and published on 2019-01-03 as U.S. patent application pub. no. 2019/0004958.

The '755 patent discloses, for instance, a "MOVGET instruction" which, when executed, triggers a "read snapshot operation," and a "MOVPUT instruction" which, when executed, triggers an "in place write update operation." Furthermore, as indicated in the '755 patent, "a read snapshot operation initiated by a consumer enables the consumer to read or source data from a producer without causing a change in the coherency state or location of the cache line containing the data, upon completion of the operation." Similarly, as further indicated in the '755 patent, "an in place write update operation initiated by a producer allows the producer to update or write to an address or cache line owned by the consumer, while maintaining the coherency state and address ownership by the consumer upon completion of the operation." For instance, a consumer may use a MOVGET instruction to read from a cache line that is owned by the producer with a coherency state of "exclusive" (E) or "modified" (M) without causing the ownership or coherency state of the cache line to change.

For purposes of this disclosure, the term "inter-node-get" refers to an operation or an instruction (e.g., a MOVGET instruction) that can be used by a first node to read data from a cache line that is owned by a second node without causing a change to the coherency state or the location of that cache line, even if the coherency state is E or M. For instance, the first node may use an inter-node-get instruction to read data from a local cache of the second node. Execution of that instruction may trigger a read snapshot operation. Accordingly, a read snapshot operation may also be referred to as an "inter-node-get operation." Furthermore, the cache line need not have an exclusive owner, more than one core may have a copy of the cache line, and the cache line could be in any coherency state other than "invalid" (I), including E, M, or "shared" (S). In the case of multiple copies, the location and the coherency state are not changed for any of the copies.

Similarly, for purposes of this disclosure, the term "inter-node-put" refers to an operation or an instruction (e.g., a MOVPUT instruction) that can be used by a first node to write data to a cache line that is owned by a second node, without causing a change to the ownership of that cache line, and without changing the coherency state of the cache line unless the cache line is in the E state. For instance, a first node may use an inter-node-put instruction to write data to a shared cache line that is owned by a second node. Execution of the instruction may trigger an in place write update operation. Accordingly, an in place write update operation may also be referred to as an "inter-node-put" operation. Furthermore, in one embodiment, the cache line must be exclusively owned by one core, and the cache line must be in either E or M state. If the inter-node-put operation finds the cache line in E state, the inter-node-put operation would then change the coherency state to M after updating the cache line.

The present disclosure describes a data processing system that supports a native messaging model which enables threads on different nodes to share data more efficiently. In other words, the present disclosure describes a data processing system with native support for inter-node messaging (i.e., for messaging between nodes). The native messaging model described herein may be used by many types of applications and functions to realize improved performance, relative to conventional methods for communicating data between nodes. Those applications and functions may include, for instance, parallel applications and runtime system functions. For instance, the native messaging model described herein may be used in connection with critical sections and with collective operations and synchronization. This native messaging model may also be used with other message passing standards, such as the standard referred to be the name or trademark of "Message Passing Interface" (MPI). It may also be used for communications by parallel programs which use the programming model referred to by the name or trademark of "partitioned global address space" (PGAS).

The native messaging model described herein may be easily usable by application and runtime library software. This native messaging model may also enable software to easily instantiate arbitrary numbers of message queues or channels, with arbitrary queue depths and arbitrary queue item data types.

In one embodiment, a data processing system uses at least one inter-node messaging controller (INMC) to implement this native messaging model, as described in greater detail below. The INMC may be considered a state machine in hardware. In one embodiment or scenario, a sender thread on one node communicates with a receiver thread on another node by using the INMC to save data to an input queue that is monitored by the receiver thread. That input queue (together with associated parameters) may be referred to as a "shared message queue," and it may implemented using a circular ring buffer that contains multiple distinct locations or "slots" for receiving individual data items from one or more sender threads, along with a head index indicating the next location to be read, and a tail index pointing to the next location to be written. Thus, the shared message queue may include (a) a data buffer with multiple slots for receiving data items, as well as related parameters such as (b) a head index to indicate which slot is to be read next by the receiver thread, (c) a tail index to indicate which slot is to be written next by a sender thread, and (d) associated parameter or constant values, such as (i) a buffer pointer to point to the data buffer and (ii) a capacity constant to indicate how many slots the data buffer contains. The shared message queue may be created by the receiver thread, it may be created by sender threads, or it may be created by other "third party" threads. In one embodiment, however, some or all of the shared message queue is owned by the receiver thread, and the data buffer of the shared message queue resides in an L1 cache of the core that is executing the receiver thread.

For purposes of this disclosure, a data item to be saved to a shared message queue may be referred to simply as an "item." Also, a core that is executing a sender thread may be referred to as a "sender core," and a core that is executing a receiver thread may be referred to as a "receiver core." As described in greater detail below, the sender core may include an INMC, the receiver core may include a cache coherent protocol interface, and the sender core may use that INMC and that cache coherent protocol interface to send an item to the receiver core.

Also, to avoid stalling the execution pipeline of the sender core, the data processing system uses the INMC to offload the queue transmission from the sender thread. Consequently, the sender thread may use a single fast instruction (e.g., an "enqueue-message instruction") to issue an enqueue command to send a message to a different core, and then the sender thread may continue to do other work while the INMC sends the message to the receiver thread in the background.

Also, message queues are implemented in main memory, where they are accessible by software. Consequently, arbitrary numbers of queues and queue sizes can be instantiated within an application's data structures.

Also, a data processing system according to the present teachings may provide for high bandwidth and for low receiver latency by using remote atomic operations, read snapshot operations, and in place write update operations for shared queue accesses and data transfers, as described in greater detail below. For instance, by using remote atomic operations, an INMC may enable multiple senders to transmit to the same queue correctly at a high rate of speed, thereby providing for high bandwidth. And by using read snapshot operations and in place write update operations, an INMC may provide low latency at the receiver.

A data processing system with a large coherent domain may use the present teachings to achieve reduced cache coherency overheads, relative to conventional approaches, thereby improving the efficiency of certain parallel applications and runtime systems. A data processing system according to the present teachings may provide for very low latency and high bandwidth core-to-core synchronization and messaging. It may also allow very fine-grained computation to be offloaded to remote cores with cache affinity to the data being processed. Offloading such work may provide advantages when processing key-value stores (KVS) and similar in-memory databases, for instance. Also, the present teachings may be used to improve collective communications such as barriers, reductions, and broadcasts in parallel runtime systems which use an application programming interface (API) such as Open Multi-Processing (OpenMP) and a message passing standard such as MPI.

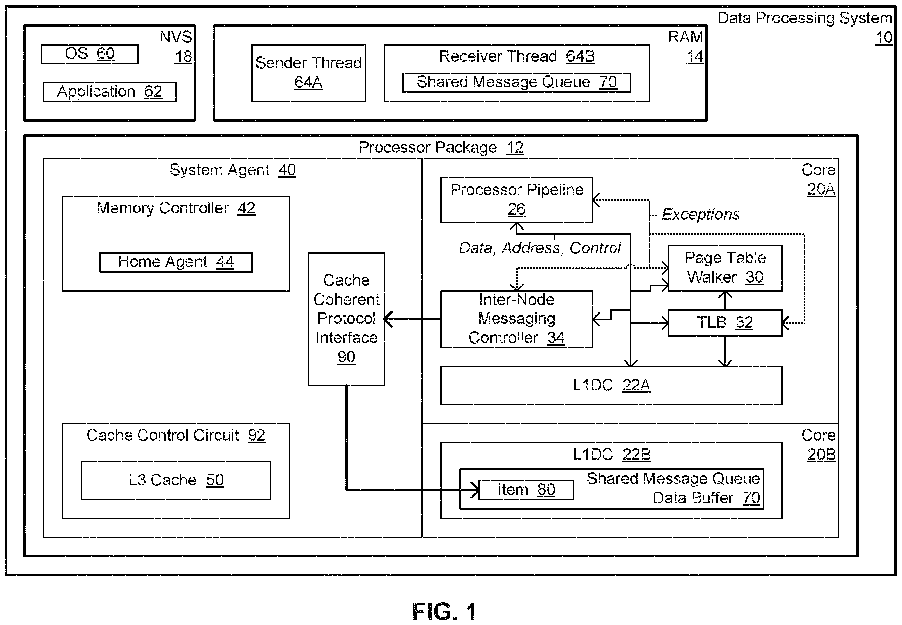

**Figure 1** is a block diagram of an example embodiment of a data processing system 10 with at least one INMC. In particular, data processing system 10 includes multiple processing cores 20A and 20B, and core 20A includes an INMC 34 which core 20A uses to send messages or items to core 20B. Accordingly, an INMC may also be referred to as a "message communication unit" (MCU). In the example of Figure 1, cores 20A and 20B reside in a processor package 12 that is coupled to random access memory (RAM) 14 and to non-volatile storage (NVS) 18. RAM 14 serves as main memory or system memory. A processor package may also be referred to simply as a "processor."

As illustrated, core 20A also includes a processor pipeline 26 for executing software, and an L1 data cache (L1DC) 22A to contain cache lines for certain portions of main memory, for ease of access by the instructions that execute on core 20A. Processor pipeline 26 may include modules or stages for fetching, decoding, and executing instructions, for reading from memory, and for writing to memory. The modules for executing instructions may be referred to as "execution units," and they may include one or more arithmetic logic units (ALUs), one or more floating-point units (FPUs), etc. Core 20A also includes a page table walker 30 and a translation lookaside buffer (TLB) 32, which may reside in a memory management unit (MMU) in core 20A. INMC 34 may use TLB 32 and page table walker 30 for virtual memory address translation during queue accesses. Core 20A also includes various registers and other processing resources.

As indicated by the solid arrows between components within core 20A, core 20A includes at least one interconnect to enable data, address, and control signals to flow between the components of core 20A. In addition, as indicated by the dashed arrows between components within core 20A, core 20A includes at least one interconnect to enable exception signals to flow between processor pipeline 26, page table walker 30, TLB 32, and INMC 34.

Also, in the example of Figure 1, core 20B includes the same kinds of components as core 20A, including an L1DC 22B, and an INMC. However, the INMC and some other components within core 20B are not shown, to avoid unnecessary complexity in the illustration. However, in other embodiments, the sender core may have different components than the receiver core. Also, as indicated above, in data processing system 10, cores 20A and 20B reside in processor package 12. In particular, cores 20A and 20B may reside in one or more integrated circuits or "chips" that are mounted to a substrate within processor package 12. The hardware of data processing system 10 may also include many other components coupled to processor package 12. Also, in other embodiments, a data processing system may include multiple processor packages, and each package may include one or more cores. Also, a data processing system may include a coherent processor interconnect to connect the cores to each other. Such an interconnect may provide for memory coherency. Consequently, the cores may use a shared address space. For instance, in one embodiment, a system may include the type of processor interconnect provided by Intel Corporation under name or trademark of Intel^{®} Ultra Path Interconnect (UPI). However, other embodiments may use other types of coherent processor interconnects.

Processor package 12 also includes a system agent 40, which may be implemented as an uncore, for example. System agent 40 includes components such as a memory controller 42 with a home agent 44, a cache control circuit 92 in communication with memory controller 42, and a cache coherent protocol interface (CCPI) 90 in communication with cache control circuit 92. As described in greater detail below, INMC 34 may use CCPI 90 to perform operations such as inter-node-get and inter-node-put operations. Cache control circuit 92 includes a level 3 (L3) cache 50 that is shared by cores 20A and 20B. However, other embodiments or scenarios may include a shared cache at a different level.

Additional details concerning CCPIs may be found in U.S. patent application pub. no. 2019/0004810, entitled "Instructions For Remote Atomic Operations," which was filed on 2017-06-29 and published on 2019-01-03. That publication ("the '810 publication") also discloses a type of operation known as a "remote atomic operation" (RAO). As described in greater detail below, data processing system 10 may use an RAO as part of the process for sending messages from a sender thread to a receiver thread.

NVS 18 includes software that can be copied into RAM 14 and executed by processor package 12. In the example of Figure 1, that software includes an operating system (OS) 60 and an application 62. For instance, application 62 may be a high-performance computing (HPC) application that uses multiple processes and/or threads running on different cores, with communication between at least some of those processes and/or threads to use a native messaging protocol according to the present disclosure. In another embodiment or scenario, the present teachings may be used by separate applications that run on separate cores and communicate with each other (e.g., using MPI). In addition or alternatively, an OS may use multiple processes and/or threads running on different cores, with communication between at least some of those processes and/or threads to use a native messaging protocol according to the present disclosure.

For purposes of illustration, this disclosure discusses a scenario involving one sender thread 64A that runs on core 20A and one receiver thread 64B that runs on core 20B. However, sender thread 64A uses a process that is robust enough to handle multiple sender threads. In another embodiment or scenario, a data processing system may include more than two cores, sender threads may run on two or more of those cores, and multiple sender threads may send data to a single shared message queue. Also, in another embodiment or scenario, software may use a sender process instead of (or in addition to) a sender thread, and/or a receiver process instead of (or in addition to) a receiver thread.

In one scenario, as illustrated be the thick arrows in Figure 1 (and as described in greater detail below), sender thread 64A on core 20A uses INMC 34 and CCPI 90 to write messages or data items (e.g., item 80) to a shared message queue data buffer 70 in L1DC 22B, to be processed by receiver thread 64B on core 20B. In particular, INMC 34 and CCPI 90 enable sender thread 64A to add item 80 to L1DC 22B without causing any changes to the ownership of the cache line or lines which receive item 80. For instance, both before and after sender thread 64A writes item 80 to shared message queue data buffer 70 in L1DC 22B, the associated cache line or lines may be owned by receiver thread 64B. Furthermore, INMC 34 and CCPI 90 enable sender thread 64A to add item 80 to L1DC 22B without changing the coherency state of the cache line or lines which receive item 80, if the initial coherency state is M. And if the initial coherency state is E, INMC 34 and CCPI 90 cause the coherency state to be changed to M after item 80 has been added to L1DC 22B.

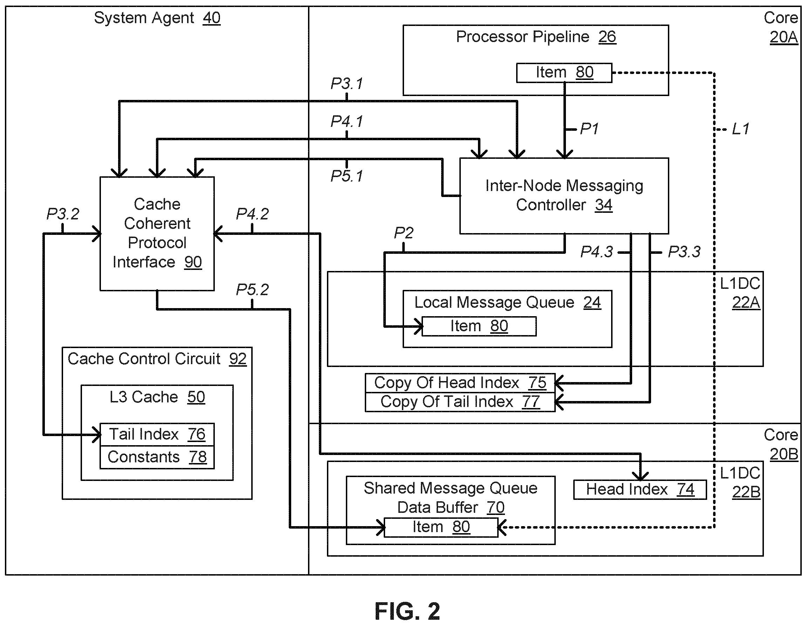

**Figure 2** is a block diagram that depicts additional details for some parts data processing system 10. Also, like Figure 1, Figure 2 involves a scenario in which sender thread 64A is running on core 20A, receiver thread 64B is running on core 20B, the shared message queue has been instantiated, and shared message queue data buffer 70 resides in one or more cache lines in L1DC 22B. L1DC 22B also includes the head index 74 of the shared message queue. Also, L3 cache 50 includes the tail index 76 and the constants 79 for the shared message queue.

In one embodiment or scenario, core 20B uses different cache lines to store (a) head index 74, (b) tail index 76, and (c) constant 78 (which includes read-only fields such as the capacity value and the buffer pointer), to avoid false sharing. Accordingly, the buffer pointer and capacity values can be read-shared by all participants. As illustrated, head index 74 may be cached at receiver core 20B, since it is written only by receiver thread 64B, and INMC 34 may use an inter-node-get instruction to access head index 74. This approach allows data processing system 10 to avoid cache line ping-ponging and corresponding pipeline bubbles at receiver core 20B. Also, tail index 76 may reside in a shared cache location such as L3 cache 50. Consequently, INMC 34 may use an RAO to read and update tail index 76, as described in greater detail below. However, in an embodiment or scenario that involves only one sender thread, the sender thread may cache the tail, and the sender thread may cause the tail to be incremented without using an RAO.

Figure 2 also shows registers in core 20A that INMC 34 uses to store a copy 75 of the head index and a copy 77 of the tail index. In another embodiment, those registers may reside in INMC 34. As indicated in Figure 2 by dashed arrow L1, from a logical perspective, sender thread 64A executing in processor pipeline 26 in core 20A writes item 80 directly into shared message queue data buffer 70 in L1DC 22B in core 20B, for use by receiver thread 64B. However, from a physical perspective, INMC 34 performs a variety of operations to write item 80 to shared message queue data buffer 70 for sender thread 64A. Those operations are illustrated with thick arrows P1 through P5.2 in Figure 2, as described in greater detail below.

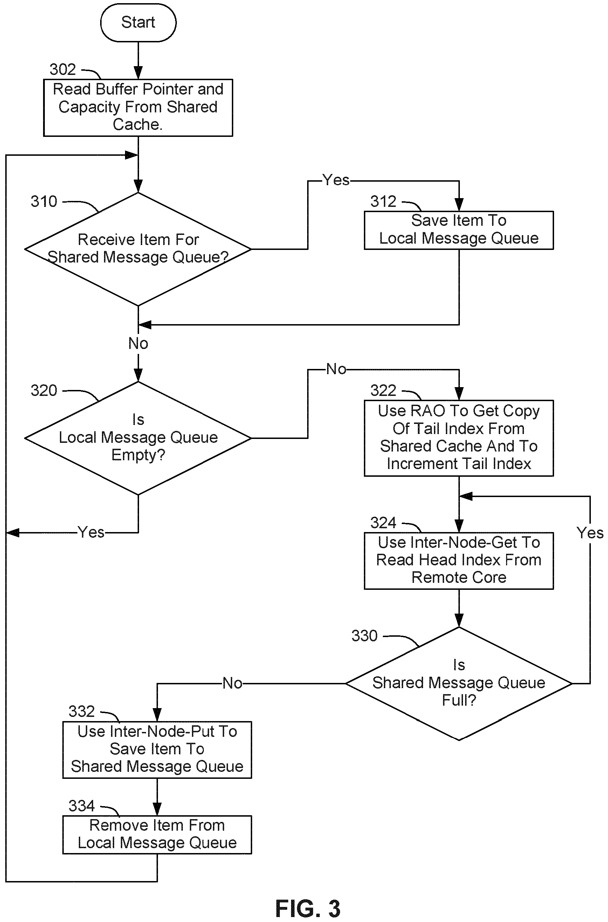

**Figure 3** presents a flowchart of an example embodiment of a process for communicating data from one node to another, in the context of data processing system 10. In particular, for purposes of illustration, the process of Figure 3 is described in the context of sender thread 64A executing on core 20A and receiver thread 64B executing on core 20B, with shared message queue data buffer 70 residing in L1DC 22B in core 20B, as indicated above. As shown at block 302, the process of Figure 3 may start with INMC 34 performing initialization operations, such as reading the buffer pointer and the capacity constant from shared L3 cache 50 and saving copies of those values in core 20A.

As shown at block 310, INMC 34 may then determine whether INMC 34 has received an item to be saved into the shared message queue. For instance, INMC 34 may make a positive determination at block 310 in response to receiving item 80 from sender thread 64A, which is executing on the same core as INMC 34. In other words, INMC 34 may determine at block 310 whether INMC 34 has received a message for a remote thread from a local thread, as illustrated by arrow P1 in Figure 2.

For instance, to send a message to the shared message queue, sender thread 64A may use a special "enqueue-message" instruction. That instruction may take a first parameter or argument that points to a local message queue 24 to be used for buffering messages that are ultimately destined for shared message queue data buffer 70. Accordingly, Figure 2 shows local message queue 24 in L1DC 22A, which is shared by processor pipeline 26 and INMC 34. Sender thread 64A may use a 64-bit scalar register for the first argument, for instance. The enqueue-message instruction may also take a second argument that constitutes the message itself, which is illustrated in processor pipeline 26 as item 80. For instance, sender thread 64A may use 1-byte to 64-byte scalar or vector register for the second argument, and core 20A may support enqueue-message instructions with different opcodes for different data widths. The enqueue-message instruction may also take a third argument that points to shared message queue data buffer 70. As described in greater detail below, INMC 34 may continuously monitor local message queue 24, and INMC 34 may dequeue items from there and enqueue them onto the shared message queue. In one embodiment, all state is maintained in software-visible cacheable memory. Since the enqueue-message instruction accesses only the local message queue, and since that queue typically remains in local L1 cache, the enqueue-message instruction typically does not cause any local core pipeline stalls.

Furthermore, core 20A may support both blocking and nonblocking versions of the enqueue-message instruction. The nonblocking version may return immediately with a failure indication (e.g. a 0 in the Z status flag) if the local message queue is full, which can easily be tested from the head, tail and capacity values for the local message queue, which may also usually reside in the local cache.

Thus, referring again to Figure 3, if INMC 34 has received a message for a remote thread from a local thread, INMC 34 saves that message to local message queue 24, as shown at block 312, and as indicated by arrow P2 in Figure 2.

As shown at block 320, INMC 34 may then determine whether local message queue 24 is empty. If local message queue 24 is empty, the process may return to block 310. However, if local message queue 24 is not empty, INMC 34 may then use an RAO (a) to get a copy of the current tail index for the shared message queue from shared cache (e.g., L3 cache 50) and (b) to increment the current tail index, thereby reserving the associated slot in shared message queue data buffer 70 for an item from local message queue 24. For instance, referring again to Figure 2, arrows P3.1 and P3.2 show that, when INMC 34 uses an RAO to get a copy of tail index 76 from L3 cache 50 and to increment tail index 76, the RAO may involve CCPI 90. In other words, INMC may interact with tail index 76 via CCPI 90. And arrow P3.3 shows that INMC 34 may save the copy of tail index 77 to a register in core 20A.

As indicated above, additional details on RAOs may be found in the '810 publication.

Also, as shown at block 324 of Figure 3, INMC 34 may use an inter-node-get instruction to get a copy of the current head index 74 from L2DC 22B in core 20B. Referring again to Figure 2, arrows P4.1 and P4.2 show that, when INMC 34 uses an inter-node-get instruction to get a copy of head index 74, the inter-node-get instruction may involve CCPI 90. In other words, INMC may obtain a copy of head index 74 via CCPI 90. And arrow P4.3 shows that INMC 34 may save the copy of head index 75 to a register in core 20A. INMC 34 may also select a "current" item from local message queue 24 (e.g., the item at the head of local message queue 24) to be copied to shared message queue data buffer 70.

As shown at block 330, INMC 34 may then use copy of head index 75, copy of tail index 77, and the capacity constant to determine whether the shared message queue is full. For instance, INMC 34 may subtract the head index from the tail index to compute the number of used slots, and INMC 34 may determine that data buffer 70 is full if the number of used slots is equal to or greater than the capacity. If data buffer 70 is full, INMC 34 may, in effect, wait for a slot to come open, as indicated by the arrow returning to block 324.

However, if the shared message queue is not full, INMC 34 may use an inter-node-put instruction to copy an item (e.g., item 80) from local message queue 24 to shared message queue data buffer 70, as shown at block 332. In particular, INMC may write the item to the slot indicated by copy of tail index 77. Referring again to Figure 2, arrows P5.1 and P5.2 show INMC 34 writing item 80 to shared message queue data buffer 70 in L1DC 22B via CCPI 90. As shown at block 334 of Figure 3, INMC 34 may then remove the current item from local message queue 24. And the process may then return to block 310, with INMC 34 receiving additional items from sender thread 64A and sending those items to the shared message queue, as indicated above.

Thus, INMC 34 uses an RAO instruction or operation to get a copy of tail index 76 and to cause tail index 76 to be incremented. INMC 34 also uses an inter-node-get instruction or operation to read head index 74, to determine whether the shared message queue is full. And if the shared message queue is not full, INMC 34 uses an inter-node-put instruction or operation to save an item to shared message queue data buffer 70.

The following pseudocode also describes the operations associated with saving an item such as item 80 to shared message queue data buffer 70. It also describes an example shared message queue data structure.

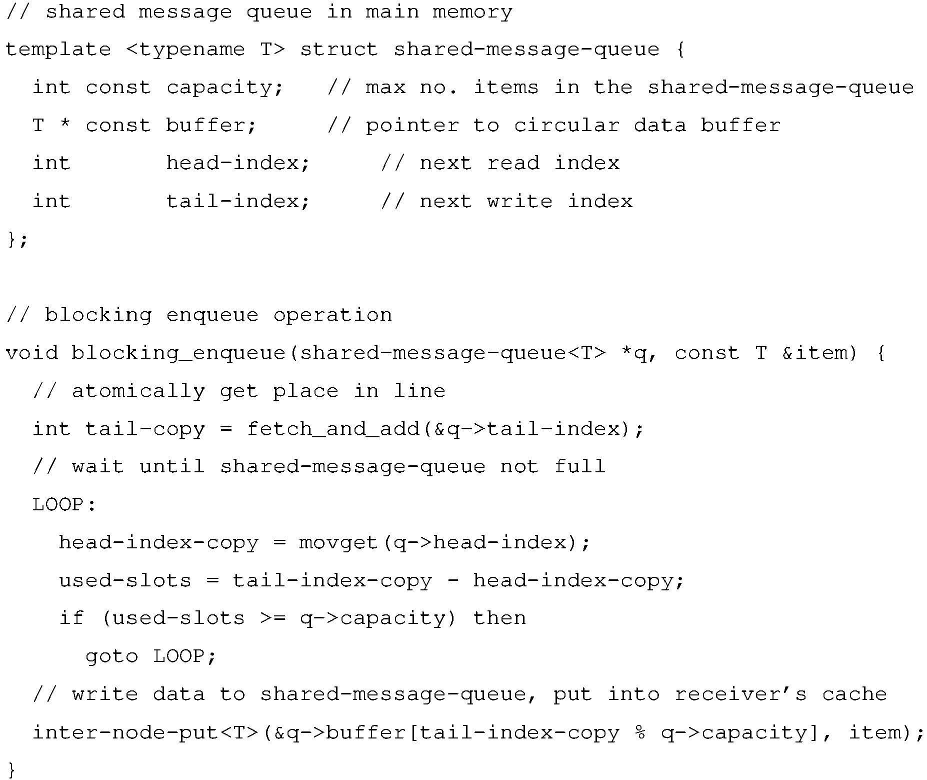

For instance, in response to a negative determination at block 320 of Figure 3, INMC 34 may call a function like the "blocking_enqueue" function in the above pseudocode to perform the operations shown at blocks 324, 330, and 332 of Figure 3.

In one embodiment, as an additional optimization, the INMC maintains a local copy of the head index to use for the queue-full computation, and the INMC only updates that copy occasionally (e.g., when the queue appears full or nearly full). This optimization may further reduce system-agent traffic and cross-core snoops, and it may be guaranteed to be conservatively correct, since only the receiver updates head, and only in a monotonically increasing fashion.

In one embodiment, the head index and the tail index are larger integers than required for the capacity of the queue. For example, a queue with capacity 64 would require 6-bit integers to address one of 64 locations, but the data processing system may use at least two additional bits (i.e. 8 bits in this case) for the head index and for the tail index, to allow full and empty conditions to be easily computed by comparing the larger index values. For instance, "empty" is when head and tail are equal, and "full" is when tail minus head is equal to or greater than the capacity. Also, with unsigned two's complement arithmetic, the full condition calculation is still valid when the head and tail overflow and "wrap around." The actual location in the data buffer may be calculated by computing the head or tail, modulo the capacity (which can be done efficiently in hardware using bitwise AND if the capacity is a power of two).

Also, the fetch_and_add operation uses an RAO which sends a request to system agent 40, where the atomic operation is performed efficiently at a shared cache level (e.g., in the last-level cache (LLC)). The return value (modulo the queue capacity) indicates where the data should be written to. But the queue may at times be full, in which case, INMC 34 waits until receiver thread 64B removes data from the queue and increments head index 74. Then, INMC 34 can write data into shared message queue data buffer 70 at the slot indicated by copy of tail index 77, modulo the capacity. Furthermore, as indicated above, INMC 34 uses an inter-node-put instruction or operation to store the data directly into L1DC 22B, for low latency access by receiver thread 64B.

Data processing system 10 thus supports a native messaging model which enables threads to communicate quickly and efficiently. Consequently, data processing system 10 may effectively execute software that is designed to transfer work between cores. For instance, a first core may use this native messaging model to quickly and efficiently transfer work to a second core. This native messaging model provides for low latency and high bandwidth messaging between the cores. It also provides for efficient message transmission that does not stall the sending core's pipeline, and it provides for low latency access to messages by receivers. It also supports arbitrary numbers of message queues, with arbitrary queue depths and queue item data types.

In one embodiment, the INMC is implemented as a hardware state machine at each core. The INMC may use inter-node-get, inter-node-put, and RAO instructions to perform remote queue operations. The state of the shared message queue (e.g., the head index, the tail index, and the data buffer slots) resides in cacheable system memory. To send a message, the sender thread (which may be referred to as "client software") supplies a queue descriptor pointer and data to be enqueued. The INMC hardware may be considered "stateless" other than the contents of memory, since the INMC does not require virtualization or any special handling when worker threads migrate (outside of ordinary cache line transfers by core or INMC demand fetches). Local latency for transferring enqueue requests from the local queue to the remote queue is kept low, since the INMC need not share critical core pipeline resources or incur costly branch mispredictions and pipeline restarts. The INMC only competes with the processor pipeline of the local core for L1DC bandwidth, and the INMC uses fast hardware mechanisms to quickly detect and respond to core message send requests (e.g., enqueue-message instructions) and relevant system agent events (e.g., inter-core-get and RAO replies).

Different types of software and/or different scenarios may involve different needs, with regard to the size of the local message queue. Those needs may differ based on factors such as the size of the data items to be sent, etc. In one embodiment, a processor provides support for different needs at different times (e.g., large or small data buffering requirements) by providing hardware support for item/payload sizes in powers of 2, from 1 byte to 64 bytes (i.e., 512 bits, or a full cache line). Also, larger payloads may be accommodated using 8-byte pointers to memory payload buffers.

Also, if the INMC encounters an exception such as a page fault while processing an enqueue-message instruction, the INMC may not be able to raise an exception on time on the enqueue-message instruction, due to the potentially long latency of remote queue operations. Consequently, the INMC may provide a mechanism for delayed exception handling. For example, in one embodiment, the INMC performs a dump to a known location in memory, so an exception handler can replay the last request (or the last N requests between the faulting request and the exception detection) after resolving the page fault. The data that is dumped may be some of the current state of the INMC, such as a cache-line-sized portion of the queue descriptor data structure. Alternatively, in another embodiment, the INMC requires queue descriptors and data buffers to reside entirely on the same page, so that page faults can be detected and resolved early, on the initial descriptor access.

### Additional Embodiments

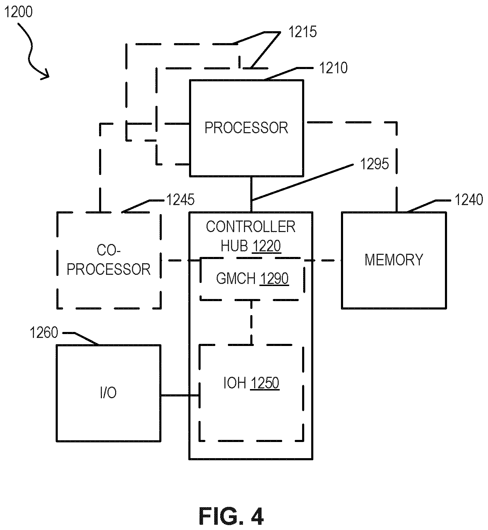

**Figure 4** is a block diagram of a system 1200 according to one or more embodiments. The system 1200 may include one or more processors 1210, 1215, which are coupled to a controller hub 1220. In one embodiment, the controller hub 1220 includes a graphics memory controller hub (GMCH) 1290 and an Input/Output Hub (IOH) 1250 (which may be on separate chips); the GMCH 1290 includes a memory controller to control operations within a coupled memory and a graphics controller to which are coupled memory 1240 and a coprocessor 1245; the IOH 1250 couples input/output (I/O) devices 1260 to the GMCH 1290. Alternatively, one or both of the memory and graphics controllers are integrated within the processor, the memory 1240 and the coprocessor 1245 are coupled directly to the processor 1210, and the controller hub 1220 is in a single chip with the IOH 1250.

The optional nature of additional processors 1215 is denoted in Figure 4 with broken lines. Each processor 1210, 1215 may include one or more processing cores and may be some version of processor 12.

The memory 1240 may be, for example, dynamic random-access memory (DRAM), phase change memory (PCM), or a combination of the two. For at least one embodiment, the controller hub 1220 communicates with the processor(s) 1210, 1215 via a multi-drop bus, such as a frontside bus (FSB), point-to-point interface such as QuickPath Interconnect (QPI), or similar connection 1295.

In one embodiment, the coprocessor 1245 is a special-purpose processor, such as, for example, a high-throughput MIC processor, a network or communication processor, a compression engine, graphics processing unit (GPU), a general purpose GPU (GPGPU), an embedded processor, or the like. In one embodiment, controller hub 1220 may include an integrated graphics accelerator.

There can be a variety of differences between the physical resources 1210, 1215 in terms of a spectrum of metrics of merit including architectural, microarchitectural, thermal, power consumption characteristics, and the like.

In one embodiment, the processor 1210 executes instructions that control data processing operations of a general type. Embedded within the instructions may be coprocessor instructions. The processor 1210 recognizes these coprocessor instructions as being of a type that should be executed by the attached coprocessor 1245. Accordingly, the processor 1210 issues these coprocessor instructions (or control signals representing coprocessor instructions) on a coprocessor bus or other interconnect, to coprocessor 1245. Coprocessor(s) 1245 accept and execute the received coprocessor instructions.

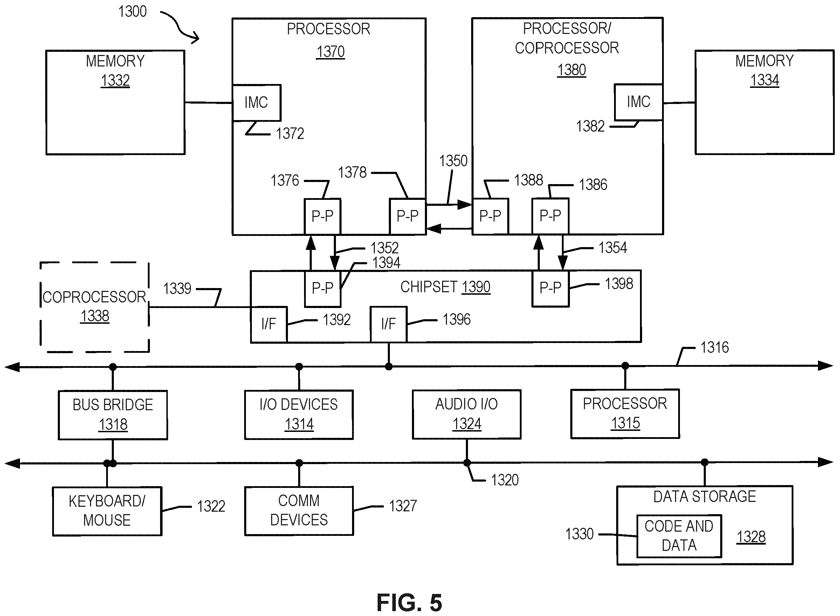

**Figure 5** is a block diagram of a first more specific exemplary system 1300 according to one or more embodiments. As shown in Figure 5, multiprocessor system 1300 is a point-to-point interconnect system, and includes a first processor 1370 and a second processor 1380 coupled via a point-to-point interconnect 1350. Each of processors 1370 and 1380 may be some version of processor 12. In one embodiment, processors 1370 and 1380 are respectively processors 1210 and 1215, while coprocessor 1338 is coprocessor 1245. In another embodiment, processors 1370 and 1380 are respectively processor 1210 and coprocessor 1245.

Processors 1370 and 1380 are shown including integrated memory controller (IMC) units 1372 and 1382, respectively. Processor 1370 also includes as part of its bus controller unit's point-to-point (P-P) interfaces 1376 and 1378; similarly, second processor 1380 includes P-P interfaces 1386 and 1388. Processors 1370, 1380 may exchange information via a P-P interface 1350 using P-P interface circuits 1378, 1388. As shown in Figure 5, IMCs 1372 and 1382 couple the processors to respective memories, namely a memory 1332 and a memory 1334, which may be portions of main memory locally attached to the respective processors.

Processors 1370, 1380 may each exchange information with a chipset 1390 via individual P-P interfaces 1352, 1354 using point to point interface circuits 1376, 1394, 1386, 1398. Chipset 1390 may optionally exchange information with the coprocessor 1338 via a high-performance interface 1339. In one embodiment, the coprocessor 1338 is a special-purpose processor, such as, for example, a high-throughput MIC processor, a network or communication processor, compression engine, graphics processor, GPGPU, embedded processor, or the like.

A shared cache (not shown) may be included in either processor or outside of both processors, yet connected with the processors via P-P interconnect, such that either or both processors' local cache information may be stored in the shared cache if a processor is placed into a low power mode.

Chipset 1390 may be coupled to a first bus 1316 via an interface 1396. In one embodiment, first bus 1316 may be a Peripheral Component Interconnect (PCI) bus, or a bus such as a PCI Express bus or another third generation I/O interconnect bus, although the scope of the present invention is not so limited.

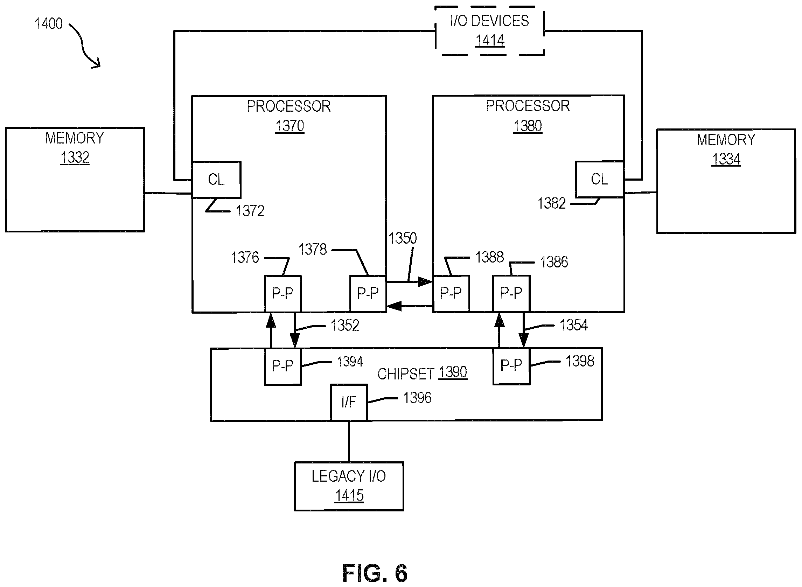

As shown in Figure 5, various I/O devices 1314 may be coupled to first bus 1316, along with a bus bridge 1318 which couples first bus 1316 to a second bus 1320. In one embodiment, one or more additional processors 1315, such as coprocessors, high-throughput MIC processors, GPGPUs, accelerators (such as, e.g., graphics accelerators or digital signal processing (DSP) units), field programmable gate arrays (FPGAs), or any other processor, are coupled to first bus 1316. In one embodiment, second bus 1320 may be a low pin count (LPC) bus. Various devices may be coupled to a second bus 1320 including, for example, a keyboard and/or mouse 1322, communication devices 1327 and a storage unit 1328 such as a disk drive or other mass storage device which may include instructions/code and data 1330, in one embodiment. Further, an audio I/O 1324 may be coupled to the second bus 1320. Note that other architectures are possible. For example, instead of the point-to-point architecture of Figure 6, a system may implement a multi-drop bus or other such architecture.

**Figure 6** is a block diagram of a second more specific exemplary system 1400 in accordance with on one or more embodiments. Certain aspects of Figure 5 have been omitted from Figure 6 in order to avoid obscuring other aspects of Figure 6.

Figure 6 illustrates that the processors 1370, 1380 may include integrated memory and I/O control logic ("CL") 1372 and 1382, respectively. Thus, the CL 1372, 1382 include integrated memory controller units and include I/O control logic. Figure 6 illustrates that not only are the memories 1332, 1334 coupled to the CL 1372, 1382, but also that I/O devices 1414 are also coupled to the control logic 1372, 1382. Legacy I/O devices 1415 are coupled to the chipset 1390.

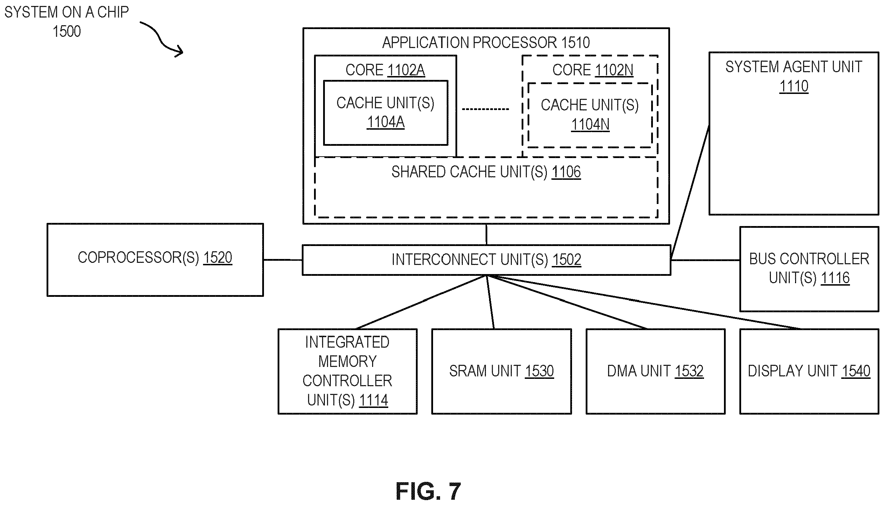

**Figure 7** is a block diagram of a system on a chip (SoC) 1500 according to one or more embodiments. Dashed lined boxes are optional features on more advanced SoCs. In Figure 7, an interconnect unit(s) 1502 is coupled to: an application processor 1510 which includes a set of one or more cores 1102A-N (including constituent cache units 1104A-N) and shared cache unit(s) 1106; a system agent unit 1110; a bus controller unit(s) 1116; an integrated memory controller unit(s) 1114; a set or one or more coprocessors 1520 which may include integrated graphics logic, an image processor, an audio processor, and a video processor; an static random-access memory (SRAM) unit 1530; a direct memory access (DMA) unit 1532; and a display unit 1540 for coupling to one or more external displays. In one embodiment, the coprocessor(s) 1520 include a special-purpose processor, such as, for example, a network or communication processor, compression engine, GPGPU, a high-throughput MIC processor, embedded processor, security processor, or the like.

Embodiments also include the following examples:
Example A1 is a processor package comprising a first core, a local cache in the first core, and an INMC in the first core. The INMC is configured to (a) receive an inter-node message from a sender thread executing on the first core, wherein the message is directed to a receiver thread executing on a second core; (b) in response to receiving the inter-node message, store a payload from the inter-node message in a local message queue in the local cache of the first core; (c) after storing the payload from the inter-node message in the local message queue, use an RAO to reserve a location at a tail of a shared message queue in a local cache of the second core; and (d) after reserving the location at the tail of the shared message queue, use an inter-node-put operation to write the payload directly to the local cache of the second core.
Example A2 is a processor package according to Example A1, wherein the operation of using an RAO to reserve a location at a tail of a shared message queue in a local cache of the second core comprises using the RAO (a) to read a current tail location from a shared cache that is shared by the first core and the second core and (b) to increment the current tail location in the shared cache.
Example A3 is a processor package according to Example A1, wherein the first local cache comprises an L1 cache, the first core comprises a general-purpose processing core, and the second core comprises a special-purpose processing core. Example A3 may also include the features of Example A2.
Example A4 is a processor package according to Example A1, wherein the INMC comprises a first INMC, and the second core comprises a second INMC. Example A3 may also include the features of any one or more of Examples A2-A3.
Example A5 is a processor package according to Example A1, wherein the operation of using an inter-node-put operation to write the payload directly to the local cache of the second core comprises causing the payload to be saved in the local cache of the second core without the second core demand fetching that payload. Example A5 may also include the features of any one or more of Examples A2-A4.
Example A6 is a processor package according to Example A1, wherein the operation of using an inter-node-put operation to write the payload directly to the local cache of the second core comprises writing the payload to the local cache of the second core via a cache coherent interconnect. Example A6 may also include the features of any one or more of Examples A2-A5.
Example A7 is a processor package according to Example A6, further comprising a system agent in communication with the first core and the second core, and a CCPI in the system agent. Also, the operation of writing the payload to the local cache of the second core via a cache coherent interconnect comprises writing the payload to the local cache of the second core via the CCPI.
Example A8 is a processor package according to Example A1, wherein the INMC is further configured to remove the payload from the inter-node message from the local message queue in the local cache of the first core in connection with writing the payload to the local cache of the second core.
Example B1 is a data processing system comprising a processor package, a first core in the processor package, a local cache in the first core, and an INMC in the first core. The INMC is configured to (a) receive an inter-node message from a sender thread executing on the first core, wherein the message is directed to a receiver thread executing on a second core; (b) in response to receiving the inter-node message, store a payload from the inter-node message in a local message queue in the local cache of the first core; (c) after storing the payload from the inter-node message in the local message queue, use an RAO to reserve a location at a tail of a shared message queue in a local cache of the second core; and (d) after reserving the location at the tail of the shared message queue, use an inter-node-put operation to write the payload directly to the local cache of the second core.
Example B2 is a data processing system according to Example B1, wherein the operation of using an RAO to reserve a location at a tail of a shared message queue in a local cache of the second core comprises using the RAO (a) to read a current tail location from a shared cache that is shared by the first core and the second core and (b) to increment the current tail location in the shared cache.
Example B3 is a data processing system according to Example B1, wherein the first local cache comprises an L1 cache, the first core comprises a general-purpose processing core. and the second core comprises a special-purpose processing core. Example B3 may also include the features of Example B2.
Example B4 is a data processing system according to Example B1, wherein the INMC comprises a first INMC, and the second core comprises a second INMC. Example B4 may also include the features of any one or more of Examples B2-B3.
Example B5 is a data processing system according to Example B1, wherein the operation of using an inter-node-put operation to write the payload directly to the local cache of the second core comprises causing the payload to be saved in the local cache of the second core without the second core demand fetching that payload. Example B5 may also include the features of any one or more of Examples B2-B4.
Example B6 is a data processing system according to Example B1, wherein the operation of using an inter-node-put operation to write the payload directly to the local cache of the second core comprises writing the payload to the local cache of the second core via a cache coherent interconnect. Example B6 may also include the features of any one or more of Examples B2-B5.
Example B7 is a data processing system according to Example B6, further comprising a system agent in the processor package, in communication with the first core and the second core, and a CCPI in the system agent. Also, the operation of writing the payload to the local cache of the second core via a cache coherent interconnect comprises writing the payload to the local cache of the second core via the CCPI.
Example C1 is an apparatus comprising a computer-readable medium, and instructions in the computer-readable medium which, when executed by a data processing system with a processor package comprising a first core and a second core, cause the data processing system to: (a) at an INMC in the first core, receive an inter-node message from a sender thread executing on the first core, wherein the message is directed to a receiver thread executing on a second core; (b) in response to receiving the inter-node message, store a payload from the inter-node message in a local message queue in a local cache of the first core; (c) after storing the payload from the inter-node message in the local message queue, use an RAO to reserve a location at a tail of a shared message queue in a local cache of the second core; and (d) after reserving the location at the tail of the shared message queue, use an inter-node-put operation to write the payload directly to the local cache of the second core.
Example C2 is an apparatus according to Example C1, wherein the instructions comprise an enqueue-message instruction which sends the payload for the internode message to the INMC, along with a pointer to the shared message queue.
Example C3 is an apparatus according to Example C1, wherein the operation of using an RAO to reserve a location at a tail of a shared message queue in a local cache of the second core comprises using the RAO (a) to read a current tail location from a shared cache that is shared by the first core and the second core and (b) to increment the current tail location in the shared cache. Example C3 may also include the features of Example C2.
Example C4 is an apparatus according to Example C1, wherein the operation of using an inter-node-put operation to write the payload directly to the local cache of the second core comprises causing the payload to be saved in the local cache of the second core without the second core demand fetching that payload. Example C4 may also include the features of any one or more of Examples C2-C3.
Example C5 is an apparatus according to Example C1, wherein the operation of using an inter-node-put operation to write the payload directly to the local cache of the second core comprises writing the payload to the local cache of the second core via a cache coherent interconnect. Example C5 may also include the features of any one or more of Examples C2-C4.
Example C6 is an apparatus according to Example C5, wherein the operation of writing the payload to the local cache of the second core via a cache coherent interconnect comprises writing the payload to the local cache of the second core via a a cache coherent protocol interface in a system agent in the processor package.

In light of the principles and example embodiments described in the present disclosure by text and/or illustration, one with skill in the art will recognize that the described embodiments can be modified in arrangement and detail without departing from the principles described herein. Furthermore, this disclosure uses expressions such as "one embodiment" and "another embodiment" to describe embodiment possibilities. However, those expressions are not intended to limit the scope of this disclosure to particular embodiment configurations. For instance, those expressions may reference the same embodiment or different embodiments, and those different embodiments are combinable into other embodiments.

Additionally, the present teachings may be used to advantage in many different kinds of data processing systems. Such data processing systems may include, without limitation, mainframe computers, mini-computers, supercomputers, high-performance computing systems, computing clusters, distributed computing systems, personal computers (PCs), workstations, servers, client-server systems, portable computers, laptop computers, tablet computers, entertainment devices, audio devices, video devices, audio/video devices (e.g., televisions and set-top boxes), handheld devices, smartphones, telephones, personal digital assistants (PDAs), wearable devices, vehicular processing systems, accelerators, systems on a chip (SoCs), and other devices for processing and/or transmitting information. Accordingly, unless explicitly specified otherwise or required by the context, references to any particular type of data processing system (e.g., a PC) should be understood as encompassing other types of data processing systems, as well. A data processing system may also be referred to as an "apparatus." The components of a data processing system may also be referred to as "apparatus."

Also, according to the present disclosure, a device may include instructions and other data which, when accessed by a processor, cause the device to perform particular operations. For purposes of this disclosure, instructions or other data which cause a device to perform operations may be referred to in general as "software" or "control logic". Software that is used during a boot process may be referred to as "firmware." Software that is stored in non-volatile memory may also be referred to as "firmware." Software may be organized using any suitable structure or combination of structures. Accordingly, terms like program and module may be used in general to cover a broad range of software constructs, including, without limitation, application programs, subprograms, routines, functions, procedures, drivers, libraries, data structures, processes, microcode, and other types of software components. Also, it should be understood that a software module may include more than one component, and those components may cooperate to complete the operations of the module. Also, the operations which the software causes a device to perform may include creating an operating context, instantiating a particular data structure, etc. Also, embodiments may include software that is implemented using any suitable operating environment and programming language (or combination of operating environments and programming languages). For example, program code may be implemented in a compiled language, in an interpreted language, in a procedural language, in an object-oriented language, in assembly language, in machine language, or in any other suitable language.

A medium which contains data and which allows another component to obtain that data may be referred to as a "machine-accessible medium" or a "machine-readable medium." Accordingly, embodiments may include machine-readable media containing instructions for performing some or all of the operations described herein. Such media may be referred to in general as "apparatus" and in particular as "program products." In one embodiment, software for multiple components may be stored in one machine-readable medium. In other embodiments, two or more machine-readable media may be used to store the software for one or more components. For instance, instructions for one component may be stored in one medium, and instructions another component may be stored in another medium. Or a portion of the instructions for one component may be stored in one medium, and the rest of the instructions for that component (as well instructions for other components), may be stored in one or more other media. Similarly, software that is described above as residing on a particular device in one embodiment may, in other embodiments, reside on one or more other devices. For instance, in a distributed environment, some software may be stored locally, and some may be stored remotely. The machine-readable media for some embodiments may include, without limitation, tangible non-transitory storage components such as magnetic disks, optical disks, magneto-optical disks, dynamic random-access memory (RAM), static RAM, non-volatile RAM (NVRAM), read-only memory (ROM), solid state drives (SSDs), phase change memory (PCM), etc., as well as processors, controllers, and other components that include data storage facilities. For purposes of this disclosure, the term "ROM' may be used in general to refer to non-volatile memory devices such as erasable programmable ROM (EPROM), electrically erasable programmable ROM (EEPROM), flash ROM, flash memory, etc.

Also, operations that are described as being performed on one particular device in one embodiment may, in other embodiments, be performed by one or more other devices. Also, although one or more example processes have been described with regard to particular operations performed in a particular sequence, numerous modifications could be applied to those processes to derive numerous alternative embodiments of the present invention. For example, alternative embodiments may include processes that use fewer than all of the disclosed operations, processes that use additional operations, and processes in which the individual operations disclosed herein are combined, subdivided, rearranged, or otherwise altered.

It should also be understood that the hardware and software components depicted herein represent functional elements that are reasonably self-contained so that each can be designed, constructed, or updated substantially independently of the others. In alternative embodiments, components may be implemented as hardware, software, or combinations of hardware and software for providing the functionality described and illustrated herein. For instance, in some embodiments, some or all of the control logic for implementing the described functionality may be implemented in hardware logic circuitry, such as with an application-specific integrated circuit (ASIC) or with a programmable gate array (PGA). Similarly, some or all of the control logic may be implemented as microcode in an integrated circuit chip. Also, terms such as "circuit" and "circuitry" may be used interchangeably herein. Those terms and terms like "logic" may be used to refer to analog circuitry, digital circuitry, processor circuitry, microcontroller circuitry, hardware logic circuitry, hard-wired circuitry, programmable circuitry, state machine circuitry, any other type of hardware component, or any suitable combination of hardware components.

Also, unless expressly specified otherwise, components that are described as being coupled to each other, in communication with each other, responsive to each other, or the like need not be in continuous communication with each other and need not be directly coupled to each other. Likewise, when one component is described as receiving data from or sending data to another component, that data may be sent or received through one or more intermediate components, unless expressly specified otherwise. In addition, some components of the data processing system may be implemented as adapter cards with interfaces (e.g., a connector) for communicating with a bus. Alternatively, devices or components may be implemented as embedded controllers, using components such as programmable or non-programmable logic devices or arrays, ASICs, embedded computers, smart cards, and the like. For purposes of this disclosure, the term "bus" includes pathways that may be shared by more than two devices, as well as point-to-point pathways. Similarly, terms such as "line," "pin," etc. should be understood as referring to a wire, a set of wires, or any other suitable conductor or set of conductors. For instance, a bus may include one or more serial links, a serial link may include one or more lanes, a lane may be composed of one or more differential signaling pairs, and the changing characteristics of the electricity that those conductors are carrying may be referred to as "signals." Also, for purpose of this disclosure, the term "processor" denotes a hardware component that is capable of executing software. For instance, a processor may be implemented as a central processing unit (CPU) or as any other suitable type of processing element. A CPU may include one or more processing cores. And a device may include one or more processors.

Other embodiments may be implemented in data and may be stored on a non-transitory storage medium, which if used by at least one machine, causes the at least one machine to fabricate at least one integrated circuit to perform one or more operations according to the present disclosure. Still further embodiments may be implemented in a computer-readable storage medium including information that, when manufactured into an SoC or other processor, is to configure the SoC or other processor to perform one or more operations according to the present disclosure. One or more aspects of at least one embodiment may be implemented by representative instructions, stored on a machine-readable medium, which represent various logic units within the processor, and which, when read by a machine, cause the machine to fabricate logic units to perform the techniques described herein. The instructions representing various logic units may be referred to as "IP cores," and they may be stored on a tangible, machine-readable medium and supplied to various customers or manufacturing facilities to load into the fabrication machines that actually make the logic units or the processor. One or more aspects of at least one embodiment may include machine-readable media containing instructions or design data which defines structures, circuits, apparatuses, processors and/or system features described herein. For instance, design data may be formatted in a hardware description language (HDL).

In view of the wide variety of useful permutations that may be readily derived from the example embodiments described herein, this detailed description is intended to be illustrative only, and should not be construed as limiting the scope of coverage.

## Claims

1. A processor package (12) comprising:
a first core (20A);
a local cache (22A) in the first core; and
an inter-node messaging controller (34), INMC, in the first core, wherein the INMC is configured to:
receive an inter-node message from a sender thread (64A) executing on the first core, wherein the message is directed to a receiver thread (64B) executing on a second core;
in response to receiving the inter-node message, store a payload (80) from the inter-node message in a local message queue (24) in the local cache of the first core;
after storing the payload from the inter-node message in the local message queue, use a remote atomic operation, RAO, to reserve a location at a tail of a shared message queue (70) in a local cache of the second core (22B), wherein the shared message queue is monitored by the receiver thread; and
after reserving the location at the tail of the shared message queue, use an inter-node-put operation to write the payload directly to the local cache of the second core.

2. A processor package according to claim 1, wherein the operation of using the RAO to reserve the location at the tail of the shared message queue in the local cache of the second core comprises:
using the RAO to read a current tail location from a shared cache that is shared by the first core and the second core and to increment the current tail location in the shared cache.

3. A processor package according to claim 1, wherein:
the first local cache comprises a level 1, L1, cache;
the first core comprises a general-purpose processing core; and
the second core comprises a special-purpose processing core.

4. A processor package according to claim 1, wherein:
the INMC comprises a first INMC; and
the second core comprises a second INMC.

5. A processor package according to claim 1, wherein the operation of using an inter-node-put operation to write the payload directly to the local cache of the second core comprises:
causing the payload to be saved in the local cache of the second core without the second core demand fetching that payload.

6. A processor package according to claim 1, wherein the operation of using an inter-node-put operation to write the payload directly to the local cache of the second core comprises:
writing the payload to the local cache of the second core via a cache coherent interconnect.

7. A processor package according to claim 6, further comprising:
a system agent in communication with the first core and the second core; and
a cache coherent protocol interface, CCPI, in the system agent; and
wherein the operation of writing the payload to the local cache of the second core via a cache coherent interconnect comprises writing the payload to the local cache of the second core via the CCPI.

8. A processor package according to claim 1, wherein the INMC is further configured to:
remove the payload from the inter-node message from the local message queue in the local cache of the first core in connection with writing the payload to the local cache of the second core.

9. A method for controlling inter-node messages, the method comprising:
at an inter-node messaging controller (34), INMC, in a first core of a processor package, receiving an inter-node message from a sender thread (64A) executing on the first core, wherein the message is directed to a receiver thread (64B) executing on a second core of the processor package;
in response to receiving the inter-node message at the INMC in the first core, storing a payload (80) from the inter-node message in a local message queue (24) in a local cache of the first core;
after storing the payload from the inter-node message in the local message queue, using a remote atomic operation, RAO, to reserve a location at a tail of a shared message queue (70) in a local cache of the second core (22B), wherein the shared message queue is monitored by the receiver thread; and
after reserving the location at the tail of the shared message queue, using an inter-node-put operation to write the payload directly to the local cache of the second core.

10. A method according to claim 9, further comprising:
executing an enqueue-message instruction which sends the payload for the inter-node message to the INMC, along with a pointer to the shared message queue.

11. A method according to claim 9, wherein the operation of using the RAO to reserve the location at the tail of the shared message queue in the local cache of the second core comprises:
using the RAO to read a current tail location from a shared cache that is shared by the first core and the second core and to increment the current tail location in the shared cache.

12. A method according to claim 9, wherein the operation of using an inter-node-put operation to write the payload directly to the local cache of the second core comprises:
causing the payload to be saved in the local cache of the second core without the second core demand fetching that payload.

13. A method according to claim 9, wherein the operation of using an inter-node-put operation to write the payload directly to the local cache of the second core comprises:
writing the payload to the local cache of the second core via a cache coherent interconnect.

14. A machine-readable medium comprising instructions which, when executed by a machine, cause the machine to perform the method of any one of claims 9-13.

15. A data processing system comprising means for performing the method of any one of claims 9-13.

## Patentansprüche

1. Prozessorgehäuse (12), das umfasst:
einen ersten Kern (20A);
einen lokalen Cache (22A) im ersten Kern und
ein Steuergerät zur Nachrichtenübermittlung zwischen Knoten (34), INMC, im ersten Kern, wobei das INMC konfiguriert ist zum:
Empfangen einer Nachricht zwischen Knoten von einem Sender-Thread (64A), der auf dem ersten Kern ausgeführt wird, wobei die Nachricht an einen Empfänger-Thread (64B), der auf einem zweiten Kern ausgeführt wird, gerichtet ist;
als Reaktion auf das Empfangen der Nachricht zwischen Knoten, Speichern einer Nutzlast (80) von der Nachricht zwischen Knoten in einer lokalen Nachrichtenwarteschlange (24) im lokalen Cache des ersten Kerns;
nach dem Speichern der Nutzlast von der Nachricht zwischen Knoten in der lokalen Nachrichtenwarteschlange, Verwenden einer entfernten atomaren Operation, RAO, um einen Ort an einem Ende einer gemeinsam genutzten Nachrichtenwarteschlange (70) in einem lokalen Cache des zweiten Kerns (22B) zu reservieren, wobei die gemeinsam genutzte Nachrichtenwarteschlange durch den Empfänger-Thread überwacht wird; und
nach dem Reservieren des Orts am Ende der gemeinsam genutzten Nachrichtenwarteschlange, Verwenden einer Put-Operation zwischen Knoten, um die Nutzlast direkt in den lokalen Cache des zweiten Kerns zu schreiben.

2. Prozessorgehäuse nach Anspruch 1, wobei die Operation des Verwendens der RAO zum Reservieren des Orts am Ende der gemeinsam genutzten Nachrichtenwarteschlange im lokalen Cache des zweiten Kerns umfasst:
Verwenden der RAO zum Lesen eines aktuellen Endorts aus einem gemeinsam genutzten Cache, der durch den ersten Kern und den zweiten Kern gemeinsam genutzt wird, und zum Inkrementieren des aktuellen Endorts im gemeinsam genutzten Cache.

3. Prozessorgehäuse nach Anspruch 1, wobei:
der erste lokale Cache einen Level-1-Cache, L1- Cache, umfasst;
der erste Kern einen Universalverarbeitungskern umfasst und
der zweite Kern einen Spezialverarbeitungskern umfasst.

4. Prozessorgehäuse nach Anspruch 1, wobei:
das INMC ein erstes INMC umfasst und
der zweite Kern ein zweites INMC umfasst.

5. Prozessorgehäuse nach Anspruch 1, wobei die Operation des Verwendens einer Put-Operation zwischen Knoten, um die Nutzlast direkt in den lokalen Cache des zweiten Kerns zu schreiben, umfasst:
Bewirken, dass die Nutzlast im lokalen Cache des zweiten Kerns gespeichert wird, ohne dass der zweite Kern diese Nutzlast bedarfsorientiert abruft.

6. Prozessorgehäuse nach Anspruch 1, wobei die Operation des Verwendens einer Put-Operation zwischen Knoten, um die Nutzlast direkt in den lokalen Cache des zweiten Kerns zu schreiben, umfasst:
Schreiben der Nutzlast in den lokalen Cache des zweiten Kerns über eine Cache-kohärente Zwischenverbindung.

7. Prozessorgehäuse nach Anspruch 6, das ferner umfasst:
einen Systemagenten in Kommunikation mit dem ersten Kern und dem zweiten Kern und
eine Cache-kohärente Protokollschnittstelle, CCPI, im Systemagenten; und
wobei die Operation des Schreibens der Nutzlast in den lokalen Cache des zweiten Kerns über eine Cache-kohärente Zwischenverbindung ein Schreiben der Nutzlast in den lokalen Cache des zweiten Kerns über die CCPI umfasst.

8. Prozessorgehäuse nach Anspruch 1, wobei das INMC ferner konfiguriert ist zum:
Entfernen der Nutzlast aus der Nachricht zwischen Knoten aus der lokalen Nachrichtenwarteschlange im lokalen Cache des ersten Kerns in Verbindung mit dem Schreiben der Nutzlast in den lokalen Cache des zweiten Kerns.

9. Verfahren zum Steuern von Nachrichten zwischen Knoten, wobei das Verfahren umfasst:
an einem Steuergerät zur Nachrichtenübermittlung zwischen Knoten (34), INMC, in einem ersten Kern eines Prozessorgehäuses, Empfangen einer Nachricht zwischen Knoten von einem Sender-Thread (64A), der auf dem ersten Kern ausgeführt wird, wobei die Nachricht an einen Empfänger-Thread (64B), der auf einem zweiten Kern des Prozessorgehäuses ausgeführt wird, gerichtet ist;
als Reaktion auf das Empfangen der Nachricht zwischen Knoten am INMC im ersten Kern, Speichern einer Nutzlast (80) von der Nachricht zwischen Knoten in einer lokalen Nachrichtenwarteschlange (24) in einem lokalen Cache des ersten Kerns;
nach dem Speichern der Nutzlast von der Nachricht zwischen Knoten in der lokalen Nachrichtenwarteschlange, Verwenden einer entfernten atomaren Operation, RAO, um einen Ort an einem Ende einer gemeinsam genutzten Nachrichtenwarteschlange (70) in einem lokalen Cache des zweiten Kerns (22B) zu reservieren, wobei die gemeinsam genutzte Nachrichtenwarteschlange durch den Empfänger-Thread überwacht wird; und
nach dem Reservieren des Orts am Ende der gemeinsam genutzten Nachrichtenwarteschlange, Verwenden einer Put-Operation zwischen Knoten, um die Nutzlast direkt in den lokalen Cache des zweiten Kerns zu schreiben.

10. Verfahren nach Anspruch 9, das ferner umfasst:
Ausführen einer Anweisung mit einer Nachricht zum Einreihen in die Warteschlange, die die Nutzlast für die Nachricht zwischen Knoten zusammen mit einem Zeiger auf die gemeinsam genutzte Nachrichtenwarteschlange an das INMC sendet.

11. Verfahren nach Anspruch 9, wobei die Operation des Verwendens der RAO zum Reservieren des Orts am Ende der gemeinsam genutzten Nachrichtenwarteschlange im lokalen Cache des zweiten Kerns umfasst:
Verwenden der RAO zum Lesen eines aktuellen Endorts aus einem gemeinsam genutzten Cache, der durch den ersten Kern und den zweiten Kern gemeinsam genutzt wird, und zum Inkrementieren des aktuellen Endorts im gemeinsam genutzten Cache.

12. Verfahren nach Anspruch 9, wobei die Operation des Verwendens einer Put-Operation zwischen Knoten, um die Nutzlast direkt in den lokalen Cache des zweiten Kerns zu schreiben, umfasst:
Bewirken, dass die Nutzlast im lokalen Cache des zweiten Kerns gespeichert wird, ohne dass der zweite Kern diese Nutzlast bedarfsorientiert abruft.

13. Verfahren nach Anspruch 9, wobei die Operation des Verwendens einer Put-Operation zwischen Knoten, um die Nutzlast direkt in den lokalen Cache des zweiten Kerns zu schreiben, umfasst:
Schreiben der Nutzlast in den lokalen Cache des zweiten Kerns über eine Cache-kohärente Zwischenverbindung.

14. Maschinenlesbares Medium, das Anweisungen umfasst, die, wenn sie durch eine Maschine ausgeführt werden, die Maschine veranlassen, das Verfahren nach einem der Ansprüche 9 bis 13 durchzuführen.

15. Datenverarbeitungssystem, das ein Mittel zum Durchführen des Verfahrens nach einem der Ansprüche 9 bis 13 umfasst.

## Revendications

1. Boîtier de processeur (12) comprenant :
un premier coeur (20A) ;
une mémoire cache locale (22A) dans le premier coeur ; et
un contrôleur de messagerie inter-nœuds (34), INMC, dans le premier coeur, l'INMC étant configuré pour :
recevoir un message inter-nœuds en provenance d'un fil émetteur (64A) s'exécutant sur le premier coeur, le message étant dirigé vers un fil récepteur (64B) s'exécutant sur un deuxième coeur ;
en réponse à la réception du message inter-nœuds, stocker une charge utile (80) provenant du message inter-nœuds dans une file d'attente de messages locale (24) dans la mémoire cache locale du premier coeur ;
après le stockage de la charge utile provenant du message inter-nœuds dans la file d'attente de messages locale, utiliser une opération atomique à distance, RAO, pour réserver un emplacement en queue d'une file d'attente de messages partagée (70) dans une mémoire cache locale du deuxième coeur (22B), la file d'attente de messages partagée étant surveillée par le fil récepteur ; et
après la réservation de l'emplacement en queue de la file d'attente de messages partagée, utiliser une opération d'insertion inter-nœuds pour écrire la charge utile directement dans la mémoire cache locale du deuxième coeur.

2. Boîtier de processeur selon la revendication 1, dans lequel l'opération d'utilisation de la RAO pour réserver la localisation en queue de la file d'attente de messages partagée dans la mémoire cache locale du deuxième coeur comprend :
l'utilisation de la RAO pour lire un emplacement de queue en cours à partir d'une mémoire cache partagée qui est partagée par le premier coeur et le deuxième coeur et pour incrémenter l'emplacement de queue en cours dans la mémoire cache partagée.

3. Boîtier de processeur selon la revendication 1, dans lequel :
la première mémoire cache locale comprend une mémoire cache de niveau 1, L1 ;
le premier coeur comprend un coeur de traitement à usage général ; et
le deuxième coeur comprend un coeur de traitement à usage spécifique.

4. Boîtier de processeur selon la revendication 1, dans lequel :
l'INMC comprend un premier INMC ; et
le deuxième coeur comprend un deuxième INMC.

5. Boîtier de processeur selon la revendication 1, dans lequel l'opération d'utilisation d'une opération d'insertion inter-nœuds pour écrire la charge utile directement dans la mémoire cache locale du deuxième coeur comprend :
la commande de la sauvegarde de la charge utile dans la mémoire cache locale du deuxième coeur sans que le deuxième coeur demande l'extraction de cette charge utile.

6. Boîtier de processeur selon la revendication 1, dans lequel l'opération d'utilisation d'une opération d'insertion inter-nœuds pour écrire la charge utile directement dans la mémoire cache locale du deuxième coeur comprend :
l'écriture de la charge utile dans la mémoire cache locale du deuxième coeur via une interconnexion cohérente de la mémoire cache.

7. Boîtier de processeur selon la revendication 6, comprenant en outre :
un agent système en communication avec le premier coeur et le deuxième coeur ; et
une interface de protocole de cohérence de mémoire cache, CCPI, dans l'agent système ; et
l'opération d'écriture de la charge utile dans la mémoire cache locale du deuxième coeur via une interconnexion cohérente de la mémoire cache comprenant l'écriture de la charge utile dans la mémoire cache locale du deuxième coeur via la CCPI.

8. Boîtier de processeur selon la revendication 1, dans lequel l'INMC est configuré en outre pour :
retirer la charge utile du message inter-nœuds provenant de la file d'attente de messages locale dans la mémoire cache locale du premier coeur en lien avec l'écriture de la charge utile dans la mémoire cache locale du deuxième coeur.

9. Procédé de commande de messages inter-nœuds, le procédé comprenant :
au niveau d'un contrôleur de messagerie inter-nœuds (34), INMC, dans un premier coeur d'un boîtier de processeur, la réception d'un message inter-nœuds en provenance d'un fil émetteur (64A) s'exécutant sur le premier coeur, le message étant dirigé vers un fil récepteur (64B) s'exécutant sur un deuxième coeur du boîtier de processeur ;
en réponse à la réception du message inter-nœuds au niveau de l'INMC dans le premier coeur, le stockage d'une charge utile (80) provenant du message inter-nœuds dans une file d'attente de messages locale (24) dans une mémoire cache locale du premier coeur ;
après le stockage de la charge utile provenant du message inter-nœuds dans la file d'attente de messages locale, l'utilisation d'une opération atomique à distance, RAO, pour réserver un emplacement en queue d'une file d'attente de messages partagée (70) dans une mémoire cache locale du deuxième coeur (22B), la file d'attente de messages partagée étant surveillée par le fil récepteur ; et
après la réservation de l'emplacement en queue de la file d'attente de messages partagée, l'utilisation d'une opération d'insertion inter-nœuds pour écrire la charge utile directement dans la mémoire cache locale du deuxième coeur.

10. Procédé selon la revendication 9, comprenant en outre :
l'exécution d'une instruction de mise en file d'attente de message qui envoie la charge utile pour le message inter-nœuds vers l'INMC, en même temps qu'un pointeur vers la file d'attente de messages partagée.

11. Procédé selon la revendication 9, dans lequel l'opération d'utilisation de la RAO pour réserver la localisation en queue de la file d'attente de messages partagée dans la mémoire cache locale du deuxième coeur comprend :
l'utilisation de la RAO pour lire un emplacement de queue en cours à partir d'une mémoire cache partagée qui est partagée par le premier coeur et le deuxième coeur et pour incrémenter l'emplacement de queue en cours dans la mémoire cache partagée.

12. Procédé selon la revendication 9, dans lequel l'opération d'utilisation d'une opération d'insertion inter-nœuds pour écrire la charge utile directement dans la mémoire cache locale du deuxième coeur comprend :
la commande de la sauvegarde de la charge utile dans la mémoire cache locale du deuxième coeur sans que le deuxième coeur demande l'extraction de cette charge utile.

13. Procédé selon la revendication 9, dans lequel l'opération d'utilisation d'une opération d'insertion inter-nœuds pour écrire la charge utile directement dans la mémoire cache locale du deuxième coeur comprend :
l'écriture de la charge utile dans la mémoire cache locale du deuxième coeur via une interconnexion cohérente de la mémoire cache.

14. Support lisible par machine comprenant des instructions qui, lorsqu'elles sont exécutées par une machine, amènent le processeur à exécuter le procédé selon l'une quelconque des revendications 9 à 13.

15. Système de traitement de données comprenant des moyens d'exécution du procédé selon l'une quelconque des revendications 9 à 13.
